# EUROPÄISCHE PATENTSCHRIFT

(11) **EP 1 472 036 B1**
(45) Veröffentlichungstag und Bekanntmachung des Hinweises auf die Patenterteilung: **26.03.2008**
(21) Anmeldenummer: 03737265.3
(22) Anmeldetag: 23.01.2003
(51) Int. Cl.: B23H 9/16, B23H 9/00

(54) **VERFAHREN UND VORRICHTUNG ZUM ERZIELEN EINES BESTIMMTEN DURCHFLUSSWIDERSTANDES EINES STRÖMUNGSKANALS MIT HILFE EINER MESSBRÜCKE**
METHOD AND DEVICE FOR OBTAINING A DETERMINED FLOW RESISTANCE OF A FLOW CHANNEL BY MEANS OF A MEASURING BRIDGE
PROCEDE ET DISPOSITIF POUR OBTENIR UNE RESISTANCE A L'ECOULEMENT DEFINIE D'UN CANAL D'ECOULEMENT A L'AIDE D'UN PONT DE MESURE

(30) Priorität: 04.02.2002 DE 10204561
(43) Veröffentlichungstag der Anmeldung: 03.11.2004
(73) Patentinhaber: Extrude Hone Gmbh, 42859 Remscheid (DE)
(72) Erfinder: GOSGER, Peter, 42659 Solingen (DE); WALTHER, Armin, 87600 Kaufbeuren (DE); MATT, Patrick, 87647 Unterthingau (DE); ERNST, Alfred, 87776 Sontheim (DE)
(74) Vertreter: Kahlhöfer, Hermann
(86) Internationale Anmeldenummer: PCT/EP2003/000633
(87) Internationale Veröffentlichungsnummer: WO 2003/066264

(56) Entgegenhaltungen:
- EP-A- 0 441 887
- EP-A- 0 802 009
- US-A- 2 266 566
- US-A- 5 865 977

## Beschreibung

Die Erfindung betrifft ein Verfahren sowie eine Vorrichtung zum Bearbeiten eines Bauteils mit einem Strömungskanal und zum Erzielen eines bestimmten Durchflusswiderstandes eines Strömungskanals, insbesondere einer Öffnung in einem Bauteil.

Die Erfindung bezieht sich allgemein auf das Bearbeiten und Dimensionieren von Strömungskanälen, insbesondere von Öffnungen oder Mündungen, vorzugsweise von kleinen Öffnungen, bei denen es darauf ankommt, einen kritischen Durchflusswiderstand zu erzielen, wie auch die genaue Angleichung von Durchflusswiderständen bei einer Anzahl solcher Strömungskanäle.

Die Bedeutung des Strömungswiderstandes eines Strömungskanals ist allgemein bekannt. Beispiele sind unter anderem Einspritzdüsen-Endstücke für Brennstoff, Vergaser-Düsen, Durchfluss von Kühlluft durch Bestandteile von Turbinen, Dosieren von Schmieröl für Präzisionslager und dergleichen. Bei vielen solcher Anwendungen hat ein genaues Zumessen von Durchflussmengen sehr große Bedeutung, bringt jedoch infolge Herstellungsbegrenzungen erhebliche Schwierigkeiten mit sich. Selbst sehr geringe Unterschiede bei den Fertigungstoleranzen können große Veränderungen beim Durchflusswiderstand und bei der Strömung hervorrufen.

Des weiteren werden Teile häufig aus einem Material gegossen oder gefertigt, das wegen besonderer Eigenschaften ausgewählt ist, wie Leitfähigkeit oder Isolierwirkung für Wärme oder Elektrizität, geringes Gewicht, Ausdehnungskoeffizient beim Erwärmen oder Kühlen, Kosten usw., wobei aber ein unterschiedlicher Anforderungsrahmen hinsichtlich der Innenfläche der Öffnung besteht. Diese besonderen Anforderungen an den inneren Durchgang lassen sich durch Plattieren oder Überziehen mit einem Metall erfüllen, das die gewünschten Eigenschaften hat. Plattieren kann durch Elektroplattieren oder stromloses (autokatalytisches) Plattieren erfolgen, während das Überziehen durch Aufdampfen unter Verwendung eines Trägergases oder eine andere derartige Technik geschehen kann. Stromloses Plattieren oder Aufdampfen ist generell zum Plattieren oder Überziehen der inneren Fläche von Gussteilen, von Bohrungen und dergleichen vorzuziehen, wo sekundäre Kathoden für ein gleichmäßiges Elektroplattieren sehr schwer zu platzieren sind.

Teile mit Durchflussöffnungen für ein Fluid werden durch mannigfaltige Gieß- und maschinelle Bearbeitungsoperationen hergestellt. So werden beispielsweise Präzisions-Formguss-Verfahren hoher Güte für die Fertigung solcher Teile angewendet. Nichtsdestoweniger ergeben sich bei derartigen Teilen gewisse Unterschiede in den Abmessungen, insbesondere hinsichtlich der Wandstärken, die auf geringe Fluchtungsfehler beim Kern oder auf eine Versetzung des Kernes zurückzuführen sind, weiterhin auch Schwankungen in der Oberflächenbeschaffenheit, einschließlich der Rauhigkeit der Oberfläche, von Grübchen, Scharten, Rillen, Blasen oder Positivmetall. Im Extremfall kann ein sehr kleiner Riss im Kern zu einer dünnen Wand führen, die in einen inneren Durchlass hinein vorsteht. Alle diese Faktoren können den Strom des Fluids wesentlich verändern.

Gegenwärtig angewendete Bearbeitungsverfahren, wie elektrische Erosions-Bearbeitung und Bohren mittels Laser oder weniger übliche Techniken wie Bohren mittels Elektronenstrahls, elektrischem Strom und sog. STEM-Bohren (eine ECM-Technik, welche ein säurehaltiges Fluid nutzt) sind nicht hinreichend genau, als dass sie die Entstehung von wesentlichen Veränderungen beim Durchflusswiderstand vermeiden könnten. Sogar das genaueste dieser Verfahren, die Elektroerosions-Bearbeitung, wird keinen perfekt gleichmäßigen Durchflusswiderstand ergeben, weil die Länge eines inneren Durchlasses infolge des angewandten Bearbeitungsverfahrens variieren kann, was Anlass zu Schwankungen der gesamten Lochlänge und des Durchflusswiderstandes ist, ungeachtet der Gleichmäßigkeit des Lochdurchmessers. Des weiteren sind ungleichmäßige Bedingungen bei der Elektroerosions-Bearbeitung unvermeidbar und können zu Änderungen hinsichtlich der Größe, der Form, des Oberflächenendzustandes und dem Zustand am Rand des Loches führen.

Zu plattierende oder zu überziehende Öffnungen müssen in ausreichendem Maße überdimensioniert werden, um eine entsprechende Dicke der Plattierung oder des Überzuges zuzulassen, und die endgültige Genauigkeit hängt von den exakten Berechnungen für die Plattierungs- oder Überzugsraten und von der Genauigkeit bei den Bohr- und Plattierungsoperationen ab. Das mit der gegenwärtigen Technologie erzielbare Produkt hat für die meisten industriellen hochgenauen Anwendungen keine ausreichende Gleichmäßigkeit. Somit ergibt sich eine Einschränkung der Wahlmöglichkeiten des Herstellers zur Fertigung des gesamten Teiles aus Materialien mit den für die Öffnung erwünschten Eigenschaften oder zum Einbetten gebohrter Teile mit vorgeschriebenen Eigenschaften in zu deren Aufnahme ausgebildeten Gussstücken. Diese Techniken haben die mit dem Bohren verbundenen Genauigkeitsprobleme, wie oben erörtert wurde. Das Plattieren von Öffnungen, die in ein Material gebohrt sind, mit Metall unterschiedlicher Eigenschaften oder sogar mit dem gleichen Metall in der Weise, dass sich ein Genauigkeits-Strom ergibt, eröffnet bei der Herstellung vieler Teile neue Wahlmöglichkeiten.

In vielen Bereichen werden die den Bohroperationen innewohnenden Abweichungen notwendigerweise in weiten Grenzen hingenommen, und die damit verbundenen Kompromisse hinsichtlich der konstruktiven Freiheit, der Ausführung und der Leistung werden als unvermeidbar in Kauf genommen. Beispielsweise erfordert die Abgabe von Brennstoff-Chargen bei Verbrennungskraftmaschinen durch Druck-Einspritzung des Brennstoffs die Zumessung des Stromes durch Düsen. Eine größere Genauigkeit bei der Regulierung des Stromes wird eine höhere Ausnutzung des Brennstoffs, Wirtschaftlichkeit und Genauigkeit des Arbeitens der Maschine ermöglichen. Zur Zeit basiert die Ausbildung solcher Brennstoff-Zumesssysteme oft auf der Messung des tatsächlichen Durchflusswiderstandes und einer Aufteilung der Lagerbestände in Bereiche von Durchfluss-Parametern, um wenigstens annähernd ein Zueinanderpassen von Teilen in einem Lagerbestand innerhalb eines Bereiches der Abweichung von vorgegebenen Toleranzen zu erreichen. Ein solches Vorgehen ist wegen der erheblichen Lagererfordernisse außerordentlich aufwendig. Außerdem fällt eine wesentliche Menge an Teilen aus dem Bereich der zulässigen Abweichungen heraus und muss mit großen Kosten nachgearbeitet werden oder ausgeschieden werden.

In der Vergangenheit wurden Brennstoff-Einspritzdüsen so gefertigt, dass die kritischen Zumessöffnungen für die Strömung durch Elektroerosions-Bearbeitung gebildet werden. Weil eine Vielzahl von Bauteilen immer kleiner dimensionierte Strömungskanäle aufweisen, welche zu kalibrieren, d.h. auf einen bestimmten Durchflusswiderstand einzustellen sind, kommt vermehrt der Homogenisierung im wesentlichen der Eintrittskante des Strömungskanals eine immer größere Bedeutung zu, denn je kleiner ein Strömungskanal dimensioniert ist, desto weniger ist ein vorrichtungstechnisches Vorgehen ermöglicht.

Ein anderes Beispiel, bei dem ein Durchflusswiderstand bei einer Öffnung von besonders kritischer Bedeutung ist, stellt die Schaffung eines Kühlluftstromes durch Gasturbinen-Bauteile, wie Turbinenschaufeln, dar. Im Präzisionsguss hergestellte Turbinenschaufeln sind typischerweise so gegossen oder gebohrt (mittels Laser-Bohren, sog. STEM-Bohren oder Elektroerosions-Bearbeitung), dass sich eine Anzahl von Löchern ergibt, die typischerweise einen Nenndurchmesser von ungefähr 0,3 mm bis 0,8 mm haben und die von dem inneren Durchlass bis in die Nähe der Profilvorderkante, der Profilhinterkante und zu irgendeiner Stelle längs des Schaufelprofils verlaufen. Kühlluft wird aus dem Inneren durch die zahlreichen Löcher hinaus in den eine hohe Temperatur aufweisenden Verbrennungsgasstrom gedrückt, um eine Kühlung der Schaufel zu erzielen. Bisweilen bemessen Löcher in inneren Wänden der Schaufel die Verteilung der Kühlluft. Es leuchtet ein, dass Änderungen im Durchflusswiderstand unterschiedliche Kühlwirkungen zur Folge haben können, was zu heißen Stellen führen kann, welche das Wärmegleichgewicht innerhalb der Komponenten und der Maschine selbst verändern und sowohl die Leistung als auch die Lebensdauer der Komponente beeinflussen können. Die Anwendung von Kühlluft sollte jedoch gering gehalten werden, weil eine übermäßige Verwendung den Wirkungsgrad der Maschine dadurch verringert, dass dem Kompressorteil Energie "gestohlen" wird. Eine präzisere Einregulierung des Durchflusswiderstandes dieser Durchlässe kann einen erheblichen Nutzungsgewinn beim Einsatz solcher Komponenten sowie der Einheiten, in denen sie eingebaut sind, erbringen.

Zusätzlich zu Köpfen für Brennstoff-Einspritzdüsen, Vergaser-Düsen, zum Durchfluss von Kühlluft durch Bauteile von Turbinen und zum Zumessen von Schmieröl für Lager gibt es zahlreiche andere Einsätze von Durchlässen oder Öffnungen zur Strömungsregulierung oder -steuerung, bei denen die vorliegende Erfindung anwendbar ist.

Aus der EP 0 441 887 B1 ist bereits ein Verfahren zur Behandlung von Öffnungen zur Erzielung eines bestimmten Durchflusswiderstandes bekannt, bei dem ein Arbeitsfluid, mit dem eine Öffnung bearbeitet wird, durch eine Öffnung fließt und bei konstantem Druck (alternativ: konstante Durchflussrate) die sich im Verlauf der Bearbeitung ändernde Durchflussrate (alternativ: ändernder Druck) gemessen wird. Sobald die Durchflussrate einen bestimmten Wert erreicht bzw. der Druck auf einen bestimmten Wert absinkt, wird das Bearbeitungsverfahren abgebrochen. Zwar können mit diesem Verfahren Durchflusswiderstände der Öffnung hinsichtlich eines Fluids genau eingestellt werden, doch erweist sich die Vorgabe eines konstanten Druckes bzw. einer konstanten Durchflussrate als aufwendig.

Ein Verfahren zum elektrochemischen Entgraten von Bohrungsändern von Ein- ist. spritzdüsen ist beispielsweise in der US 5,865,977 beschrieben, welches Dokument als nächstliegender Stand der Technik anzusehen ist. Dabei werden einige Probeläufe nacheinander durchgeführt und nach jedem Bearbeitungs-Probelauf eine Kalibrierung mit Prüföl unter hohem Druck durchgeführt. Dabei nähert sich der Ist-Wert des Prüfoldurchflusses allmählich einem Soll-Wert an. Der maximale Elektrolytfluss am Ende des Bearbeitungsvorgangs im letzten Probelauf, der eine Düse ergibt, die in einem engen Toleranzbereich kalibriert ist, wird als Regelgröße für die anschließende Serienfertigung der Düsenkörper verwendet, wobei mit konstantem Druck der Elektrolytflüssigkeit solange elektrochemisch entgratet wird, bis der Elektrolytdurchfluss den gefundenen Soll-Wert erreicht hat.

Darüber hinaus ist noch ein Prüfverfahren zur Bestimmung der Größe einer Öffnung bekannt, das aus der US 2,266,566 hervorgeht. Dabei wird ein Prüffluid durch eine Messanordnung mit zwei Messleitung geleitet, wobei nach Art einer Wheatstoneschen Brücke der Druckunterschied in beiden Messleitungen, die jeweils zwei Strömungswiderstände umfassen, angezeigt wird.

Damit ist es Aufgabe der vorliegenden Erfindung, ein verbessertes Verfahren zum Erzielen eines bestimmten Durchflusswiderstandes eines Strömungskanals sowie eine verbilligtere, insbesondere zur Durchführung des Verfahrens geeignete, Vorrichtung zu schaffen, mittels welcher ein Strömungskanal eines Bauteils präzise und mit insbesondere baulich weniger aufwendigen Mitteln als im Stand der Technik vorgeschlagen hinsichtlich seines Durchflusswiderstandes eingestellt werden kann.

Diese Aufgabe wird erfindungsgemäß durch ein Verfahren mit den Merkmalen gemäß Anspruch 1 sowie durch eine Vorrichtung mit den Merkmalen gemäß Anspruch 13 gelöst. Vorteilhafte Ausgestaltungen und Weiterbildungen, die jeweils einzeln angewandt oder beliebig miteinander kombiniert werden können, sind Gegenstand der jeweilig abhängigen Ansprüche.

Das erfindungsgemäße Verfahren zum Erzielen eines bestimmten Durchflusswiderstandes eines Strömungskanals, insbesondere einer Öffnung in einem Bauteil, umfasst folgende Schritte: ein Fluid strömt durch den Strömungskanal; es wird eine Kenngröße bestimmt, die vom Durchflusswiderstand des Strömungskanals in dem Bauteil abhängt; der Strömungskanal wird mit einem Arbeitsverfahren solange bearbeitet, bis die Kenngröße einen vorgegebenen Sollwert erreicht; und ist dadurch gekennzeichnet, dass die Kenngröße mit Hilfe einer Messbrücke bestimmt wird.

Die Bestimmung der Kenngröße mit Hilfe einer Meßbrücke hat den Vorteil, dass unabhängig von Fluktuationen eines Druckes oder einer Durchflussrate des Fluids die Kenngröße präzise festgestellt werden kann. Insbesondere bei Abgleich der Messbrücke und der damit verbundenen stromlosen Messung spielen Fluktuation, wie sie beispielsweise von einer Kolbenpumpe hervorgerufen werden, keine Rolle. Damit sind Mittel, die den Druck im bzw. die Durchflussrate des Fluids stabilisieren, überflüssig. Sobald die Kenngröße den Sollwert erreicht hat wird das Arbeitsverfahren abgebrochen. Hierzu ist eine Regelung zweckmäßig.

Der Begriff Messbrücke ist der Elektrotechnik entlehnt und stellt in ihrer einfachsten Ausführungsform vier komplexwertige Impedanzen in Beziehung.

Komplexwertige Impedanzen sind Widerstände, die neben dem reellen Widerstand (z.B. der sog. Ohmschen Widerstand für die Fluiddynamik, bei dem der über einen Strömungswiderstand abfallende Druck proportional zur Durchflussrate ist) auch imaginäre Anteile, die durch Trägheitswiderstände beziehungsweise Kompressionswiderstände hervorgerufen werden, und sich in einem Phasenwinkel zwischen dem Druck und der Durchflussrate niederschlagen.

Hilfreich zum Verständnis der Messbrücke in der Strömungsmechanik bzw. Fluiddynamik ist die Analogie zur Elektrotechnik, wobei der in einem Fluid herrschende Druck einem Spannungspotential und die Durchflussrate eines Fluids der Strömstärke des elektrischen Stromes entspricht.

Mit dem Abgleich der Messbrücke und der stromlosen Messung kann die Kenngröße, mit deren Hilfe der Durchflusswiderstand des Strömungskanals bestimmt wird, sehr genau bestimmt werden. In der Praxis werden Genauigkeiten je nach verwendeten Detektoren von etwa einem Tausendstel (0,1 %) erreicht.

Fehler bei der Bestimmung der Kenngröße in einer Messbrücke können dadurch auftreten, dass sich die Dichte des Fluids beispielsweise durch Bläschenbildung ändert, was jedoch bei den für die betrachteten Arbeitsverfahren verwendeten Drücke von mindestens 20 bar, insbesondere von mindestens 50 bar, besonders bevorzugt bei über 70 bar bei Bearbeitungen von Bauteilen auf üblicherweise aus Edelstahl gefertigten Vorrichtungen sowie bei den üblichen Temperaturen von weniger als 100° C bei der üblichen Verwendung von Wasser als Fluid unkritisch ist.

Alternativ hierzu wird erfindungsgemäß bevorzugt ein mittlerer Bearbeitungsdruck zwischen 3 bis 8 bar, vorzugsweise 4 bis 6, insbesondere 5 bar vorgeschlagen, womit in vorteilhafter Weise je nach gewähltem Druck besondere wie auch gewöhnliche Kunststoffe vorrichtungstechnisch Verwendung finden können, also insbesondere die Leitungen der Brücke beispielsweise aus handelsüblichen PVC-Rohren gefertigt sein können.

Die stromlose Messung erlaubt eine Messung der Kenngröße unabhängig von Fluktuationen der Pumpe, die das Fluid durch die Messbrücke und den Strömungskanal pumpt. Umgekehrt bedeutet dieses, dass auch Pumpen verwendet werden können, die hinsichtlich ihrer Förderkonstanz bzw. ihrer Druckstabilität keinen großen Anforderungen genügen müssen. Durch die Verwendung einer abgeglichenen Messbrücke werden Mittel, die den Druck im oder die Durchflussrate des Fluids stabilisieren, überflüssig. Damit wird auf effiziente Weise eine Kenngröße mit hoher Präzision bestimmt, mit der ein bestimmter Durchflusswiderstand eines Strömungskanals präzise einjustiert werden kann.

Erfindungsgemäß bevorzugt wird während einer Bearbeitungspause gemessen, d.h. in Zeiträumen von z.B. 3 bis 5 Sekunden, in welchen keine elektrische Spannung zwischen Kathode und dem zu kalibrierenden Bauteil anliegt und Material abgetragen wird, kann der Bearbeitungsprozess in vorteilhafter Weise beeinflusst werden. Insbesondere wird vorgeschlagen, zusätzlich auch die Kathode(n) während der Bearbeitungspausen aus den Strömungskanälen kurzfristig zu entfernen, um die sich während einer Bearbeitung ändernde Charakteristik des Fluids hinsichtlich seines Durchflusses einerseits sowie hinsichtlich seiner Reaktion zu Eisenhydrooxid und Wasserstoff andererseits zu eliminieren.

Geeigneterweise wird der Sollwert dadurch vorgegeben, dass die in der Messbrücke vorhandenen Komponenten hinsichtlich ihrer Widerstände, bzw. ihrer Impedanzen, derart ausgewählt werden, dass beim Erreichen eines bestimmten Durchflusswiderstandes die Messbrücke abgeglichen ist.

Der Strömungskanal wird mit einem Arbeitsverfahren bearbeitet, bis die Kenngröße einen vorgegebenen Sollwert erreicht. Das Arbeitsverfahren zur Bearbeitung des Strömungskanals wird Vorteilhafterweise aus der Gruppe chemische Bearbeitung, hydroabrasive Bearbeitung, mechanische Bearbeitung, elektrochemische Bearbeitung (ECM), Elektroerosions-Bearbeitung, Elektroplattieren, stromloses Plattieren, Beschichten, und Aufdampfen ausgewählt. Mit diesen Arbeitsverfahren können kleine Strömungskanäle mit Öffnungsdurchmessern von wenigen Zehntel Mikrometern in Verbindung mit dem erfindungsgemäßen Verfahren präzise bearbeitet und eingestellt werden, wobei der Strömungskanal in seinen geometrischen Abmaßen so verändert wird, dass je nach Wahl des Arbeitsverfahren der Durchflusswiderstand während der Bearbeitung zu- oder abnimmt, und wobei mit Hilfe des erfindungsgemäßen Verfahrens Durchflusswiderstände eines Strömungskanals, beispielsweise von Vergaserdüsen oder Gasturbinenbauteile präzise mit Toleranzen von besser 1 % eingestellt werden können.

Vorteilhafterweise wird eine nach dem Prinzip einer Wheatstoneschen Brücke aufgebauten Messbrücke verwendet, bei welclier der Strömungskanal mittels einer ersten Leitung mit einem ersten Strömungswiderstand zu einer ersten Reihenschaltung und ein zweiter Strömungswiderstand mittels einer zweiten Leitung mit einem dritten Strömungswiderstand zu einer zweiten Reihenschaltung verbunden werden, und bei welcher die erste und die zweite Reihenschaltung zu einer Parallelschaltung verschaltet werden, wobei ein Fluid durch die Parallelschaltung strömt und als Kenngröße die Druckdifferenz des Fluids zwischen der ersten Leitung und der zweiten Leitung und/oder eine Flussrate in einer dritten Leitung, welche die erste Leitung mit der zweiten Leitung verbindet, und/oder die Kombination aus beiden bestimmt wird.

Die Wheatstonesche Brücke stellt eine Grundvariante der Messbrücken dar, wobei die verwendeten Komponenten ein Ohmsches Widerstandsverhalten zeigen. Mit dem Begriff Strömungswiderstand ist hier ein Bauteil zu verstehen, der die physikalische Eigenschaft eines Durchflusswiderstandes aufweist.

Die Analogie der Fluid- bzw. Hydrodynamik zur Elektrotechnik mit einem Ohmschen Widerstand ist durch den Umstand begrenzt, dass ein nicht-lineares Verhalten von Widerständen in der Hydrodynamik aufgrund von Turbulenzen und Wirbeln vergleichsweise früh einsetzt, so dass der Durchflusswiderstand eines Strömungswiderstandes beziehungsweise eines Strömungskanals schon bei mäßigen Durchflussraten ein nichtlineares Verhalten zeigt. Insbesondere steigt beim Einsetzen von Wirbeln (üblicherweise bei einer Reynoldszahl von etwa 1000) der Durchflusswiderstand bei zunehmender Durchflussrate des Fluids überproportional stark an. Damit sind Strömungswiderstände in der Hydrodynamik nicht ohne weiteres Ohmschen Widerständen in der Elektrik gleichzusetzen. Jedoch ist es möglich, in einem Bereich um eine mittlere Durchflussrate beziehungsweise um einen mittleren Druck, den Durchflusswiderstand zu linearisieren, so dass trotzdem in diesem Bereich mit geeignet angepassten Widerstandsparametern die Analogie zum Ohmschen Widerstand aufstellbar ist.

Bei der abgeglichenen Wheatstoneschen Brücke ist der Quotient aus dem Durchflusswiderstand des dritten Strömungswiderstand und dem Durchflusswiderstand des zweiten Strömungswiderstand gleich dem Quotienten aus Durchflusswiderstand des Strömungskanals und Durchflusswiderstand des ersten Strömungswiderstand. Im abgeglichenen Zustand verschwindet die Druckdifferenz des Fluids zwischen der ersten Leitung und der zweiten Leitung beziehungsweise verschwindet die Flussrate in einer dritten Leitung, welche die erste Leitung mit der zweiten Leitung verbindet.

Dieses Verschwinden der Druckdifferenz beziehungsweise der Flussrate unabhängig von der Gesamtflussrate, die durch die gesamte Parallelschaltung fließt, wird allein durch die Verhältnisse der jeweiligen Durchflusswiderstände bewirkt. Werden die drei Strömungswiderstände vorgegeben, kann mit Hilfe des Abgleichzustands mit hoher Präzision festgestellt werden, wann der gewünschte Durchflusswiderstand des Strömungskanals erzielt ist. Dabei wird der Strömungskanal während der Bestimmung der Kenngröße mit Hilfe der Messbrücke mit einem Arbeitsverfahren solange bearbeitet, bis die Kenngröße verschwindet. Geeigneterweise werden als Detektoren für die Kenngröße Detektoren eingesetzt, die insbesondere bei verschwindender Kenngröße eine hohe Auflösung haben.

Damit ist die Präzision des Verfahrens zum Erzielen eines bestimmten Durchflusswiderstandes allein durch die Konstanz der Durchflusswiderstände der Strömungskanäle sowie durch das Auflösungsvermögen des Detektors bestimmt. Mit dem erfindungsgemäßen Verfahren kann der Durchflusswiderstand eines Strömungskanals mit einer Präzision von etwa einem Tausendstel (0,1 %) eingestellt werden.

Vorteilhafterweise wird der Sollwert für eine vorgebbare mittlere Durchflussrate beziehungsweise für einen vorgebbaren mittleren Druck bestimmt. Dieses ist insbesondere dann vorteilhaft, wenn mittlere Durchflussraten beziehungsweise mittlere Drücke betrachtet werden, bei denen der Durchflusswiderstand des Strömungskanals ein nichtlineares Verhalten zeigt. Durch Vorgabe einer mittleren Durchflussrate beziehungsweise eines mittleren Druckes werden Fehler vermieden, die sich aus dieser Nichtlinearität ergeben könnten.

In einer besonderen Ausgestaltung des erfindungsgemäßen Verfahrens wird der Sollwert mit Hilfe eines Master-Objekts bestimmt. Dazu wird der Strömungskanal durch das Masterobjekt ausgetauscht und anschließend die Kenngröße bestimmt. Mit Hilfe des Masterobjektes wird ein gewünschter Durchflusswiderstand und damit der Sollwert für die Kenngröße vorgeben. Im Laufe des Verfahren wird der Strömungskanal solange bearbeitet, bis die Kenngröße und damit der Durchflusswiderstand des Strömungskanal genau dem des Master-Objekts entspricht.

Vorteilhafterweise ist mindestens ein Widerstand aus der Gruppe erster Strömungswiderstand, zweiter Strömungswiderstand und dritter Strömungswiderstand variierbar. Durch die Variierbarkeit wenigstens eines Widerstandes der drei Strömungswiderstände kann ein bestimmter Sollwert vorgegeben werden, der dann erreicht ist, wenn das Bauteil solange bearbeitet ist, dass der Zustand des Abgleichs der Messbrücke erreicht ist. Beispielsweise wird der Durchflusswiderstand wenigstens eines Strömungswiderstandes so variiert, dass die Messbrücke mit dem Master-Objekt abgeglichen ist. Durch die Variierbarkeit wird gewährleistet, dass die Messbrücke für verschiedene Sollwerte geeignet ist. Insbesondere können hiermit auf einfache Weise verschiedene Strömungskanäle mit unterschiedlichen Durchflusswiderständen auf einfache und schnelle Weise einjustiert werden.

Die Variierbarkeit eines Widerstandes eines Strömungswiderstandes kann dadurch bewirkt werden, dass der Öffnungsquerschnitt des Strömungswiderstandes für das Fluid variiert wird. Dabei kann der freie Querschnitt einer einzelnen Öffnung wie die Anzahl einer Mehrzahl parallel verschalteter Öffnungen verringert beziehungsweise vergrößert werden.

In jedem Fall ist es vorteilhaft, wenn der variierbare Widerstand so vorgebbar ist, dass die Messbrücke abgeglichen ist, sobald der gewünschte Sollwert des Strömungskanals erreicht ist. Hiermit wird der Abgleichzustand der Messbrücke vorgegeben. Eine stromlose Messung erlaubt eine hohe Präzision bei der Einstellung des Strömungskanals.

Es ist von Vorteil, wenn der variable Widerstand mit Hilfe eines Master-Objektes vorgegeben wird, indem das Master-Objekt an die Stelle des Strömungskanals gesetzt wird und durch Einstellen des variablen Widerstands die Messbrücke abgeglichen wird. Hiermit wird erreicht, dass ein Strömungskanal eingestellt werden kann, ohne dass eine aufwendige Datenverarbeitung erforderlich ist. Das Master-Objekt stellt ein Vergleichsobjekt dar, mit dem der Sollwert bestimmt und das Arbeitsverfahren solange durchgeführt wird, bis der Strömungswiderstand des Strömungskanals den gewünschten Durchflusswiderstand aufweist.

Für das erfindungsgemäße Verfahren können als Fluid elektrolytische Lösungen, korrosive Fluide, dielektrische Fluide, Säuren, Laugen und/oder Trägergase verwendet werden. Mit derartigen Fluiden können Strömungskanäle, wie z.B. Öffnungen oder andere, schwer zugängliche hohle Räume auf vorteilhafte Weise von innen her bearbeitet werden.

Vorteilhafterweise werden die Kenngrößen mit Hilfe eines Lockin-Verfahrens bestimmt. Dazu wird der Druck des durch den Strömungskanal fließende Fluids und/oder die durch den Strömungskanal fließende Durchflussrate mit einer Modulationsfrequenz moduliert, und die Kenngröße bei der entsprechenden Modulationsfrequenz frequenzselektiv analysiert und verstärkt. Zur Erzeugung der Modulation wird vorteilhafterweise die Pumpe verwendet, die für die Beförderung des Fluids eingesetzt wird. Beispielsweise gibt eine Kolbenpumpe durch ihre Drehfrequenz eine Modulationsfrequenz vor. Mit Hilfe des Lockin-Verfahrens lässt sich das Rauschen der Detektoren und/oder der Elektronik (z.B. thermisches Rauschen) erheblich unterdrücken. Das Signal-Rauschverhältnis und damit die mit dem Verfahren erzielbaren Toleranzen bei der Einstellung von Strömungskanälen werden um einen Faktor 100 bis 1000 verbessert.

Die erfindungsgemäße Vorrichtung zum Erzielen eines bestimmten Durchflusswiderstands eines Strömungskanals, insbesondere eine Öffnung in einem Bauteil, vorzugsweise zur Durchführung des erfindungsgemäßen Verfahrens, umfasst eine Einrichtung zur Erzeugung eines Fluidstroms, ein Fluidreservoir und eine Messbrücke zur Bestimmung einer Kenngröße, die vom Durchflusswiderstand des Strömungskanals in dem Bauteil abhängt.

Mit Hilfe der Messbrücke wird ein stromloses Bestimmen des Durchflusswiderstandes des Strömungskanals ermöglicht, welches eine hohe Präzision bei der Kalibrierung eines Strömungskanals eines Bauteils bietet. Im abgeglichenen Zustand wird mit der Messbrücke eine stromlose Messung durchgeführt, die weitgehend unabhängig von Fluktuationen der Drücke beziehungsweise der Durchflussrate in der Vorrichtung ist.

Vorteilhafterweise ist die Messbrücke nach dem Prinzip einer Wheatstonschen Brücke aufgebaut, bei welcher der Strömungskanal mittels einer ersten Leitung mit einem ersten Strömungswiderstand zu einer ersten Reihenschaltung und ein zweiter Strömungswiderstand mittels einer zweiten Leitung mit einem dritten Strömungswiderstand zu einer zweiten Reihenschaltung verbunden ist, und bei welcher die erste und die zweite Reihenschaltung zu einer Parallelschaltung verschaltet sind, wobei an der ersten Leitung und an der zweiten Leitung ein Drucksensor und/oder zwischen der ersten Leitung und der zweiten Leitung eine dritte Leitung mit einem Durchflussratensensor vorgesehen ist.

Die beiden an der ersten und zweiten Leitung angeordneten Drucksensoren können durch ein Druckdifferenzsensor zwischen der ersten Leitung und der zweiten Leitung ersetzt werden. Ebenso kann der Durchflussratensensor in der dritten Leitung durch einen Leistungssensor ersetzt werden, der eine Kombination aus dem Druck und der fließenden Durchflussrate z.B. die Leistung misst. Die Leistung ist in der Fluiddynamik definiert als das Produkt aus Durchflussrate und Druck und kann ebenso als Kenngröße erfasst werden, um festzustellen, wann die Messbrücke abgeglichen ist beziehungsweise wann der Durchflusswiderstand des Strömungskanals dem gewünschten Wert entspricht.

Zur Vermeidung von Störungen beim Betrieb der Vorrichtung z.B. bedingt durch ein Ablösen von Partikeln vom Strömungskanal, die zu einer fehlerhaften Justage des Strömungskanals führen können, ist der Strömungskanal in der Messbrücke in Strömungsrichtung des Fluids hinter den ersten Strömungswiderstand angeordnet. Damit wird sichergestellt, dass sich vom Strömungskanal lösende Partikel nicht in den Strömungswiderständen bzw. in und an den Detektoren festsetzen und damit eine fehlerhaft Einkalibrierung des Strömungswiderstandes bewirken.

Vorteilhafterweise umfasst die erfindungsgemäße Vorrichtung einen Lockin-Verstärker zur Verbesserung des Signal-Rauschverhältnisses der Kenngröße. Hiermit wird die Kenngröße frequenzselektiv bei einer Modulationsfrequenz analysiert und verstärkt. Dafür umfasst die Vorrichtung einen Modulationsfrequenzgenerator, der die Durchflussrate durch den Strömungskanal oder den Druck des Fluids vor dem Strömungskanal mit einer Modulationsfrequenz moduliert. Ein Sensor erfasst die Modulationsfrequenz am Modulationsfrequenzgenerator für den Lockin-Verstärker. Der Modulationsfrequenzgenerator ist vorteilhafterweise die Pumpe, die für die Beförderung des Fluids verwendet wird.

Weitere Vorteile und Einzelheiten der Erfindung werden anhand der folgenden Zeichnung, welche die Erfindung lediglich exemplarisch veranschaulichen soll, erläutert.

Es zeigen schematisch:
- Fig. 1: eine erste erfindungsgemäße Vorrichtung zum Erzielen eines bestimmten Durchflusswiderstandes mit Hilfe einer Wheatstoneschen Brücke; und
- Fig. 2: eine weitere erfindungsgemäße Vorrichtung.

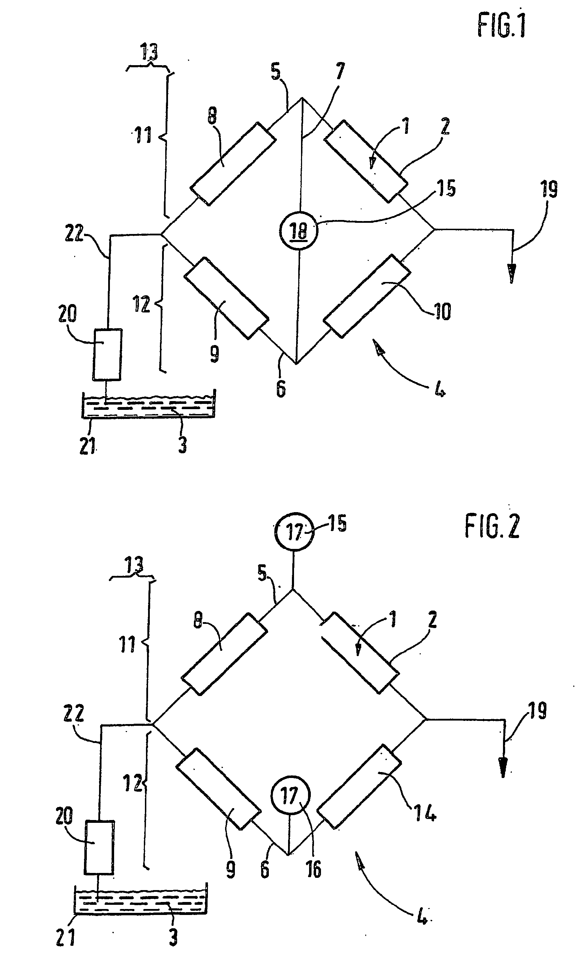

Fig. 1 zeigt eine erste erfindungsgemäße Vorrichtung zum Erzielen eines bestimmten Durchflusswiderstandes eines Strömungskanals 1, insbesondere eine Öffnung in einem Bauteil 2, mit einem Fluidreservoir 21, einer Einrichtung 20 zur Erzeugung eines Fluidstroms, beispielsweise einen Generator, eine Pumpe, einen Druckspeicher oder dergleichen, und einer Messbrücke 4, in der das Bauteil 2 mit dem Strömungskanal 1 eingebaut ist.

Ein Fluid 3 wird aus dem Fluidreservoir 21 mit Hilfe z.B. einer Kolbenpumpe 20 über eine Zuleitung 22 in die Messbrücke 4 gepumpt und teilt sich dort auf eine erste Reihenschaltung 11 und eine zweite Reihenschaltung 12 auf, die zusammen zu einer Parallelschaltung 13 verschaltet sind. Die erste Reihenschaltung 1 umfasst einen ersten Strömungswiderstand 8 und den Strömungskanal 1. Die zweite Reihenschaltung 12 umfasst einen zweiten Strömungswiderstand 9 und einen dritten Strömungswiderstand 10. Der erste Strömungswiderstand 8 ist mit dem Strömungskanal 1 in der ersten Reihenschaltung 11 mit Hilfe einer ersten Leitung 5 verbunden. Der zweite Strömungswiderstand 9 und der dritte Strömungswiderstand 10 ist in der zweiten Reihenschaltung 12 mit einer zweiten Leitung 6 verbunden. Das Fluid 3 verlässt die Messbrücke 4 beispielsweise über einen Abfluss 19.

Die Kenngröße wird mit Hilfe eines Durchflussratensensors 18 bestimmt, der die Flussrate in einer dritten Leitung 7, welche die erste Leitung 5 mit der zweiten Leitung 6 verbindet. Im Zustand des Abgleichs der Messbrücke ist der Quotient aus Durchflusswiderstand des Strömungskanals 1 und Durchflusswiderstand des ersten Strömungswiderstandes 8 gleich dem Quotienten aus Durchflusswiderstand des dritten Strömungswiderstand 10 und Durchflusswiderstand des zweiten Strömungswiderstand 9. Im abgeglichenen Zustand verschwindet der in der dritten Leitung 7 fließende Fluidstrom. Sobald die Kenngröße ihren vorgegebenen Sollwert erzielt hat, insbesondere der abgeglichene Zustand der Messbrücke erreicht ist, wird das Arbeitsverfahren zur Bearbeitung des Strömungskanals mit Hilfe einer Regelung (nicht abgebildet) abgebrochen.

Fig. 2 zeigt eine Variante der erfindungsgemäßen Vorrichtung nach Fig. 1 mit dem Unterschied, dass zwischen der Leitung 5 und der zweiten Leitung 6 eine Druckdifferenzmessung durchgeführt wird, wobei in der ersten Leitung 5 ein Detektor 15 und in der zweiten Leitung 6 ein Detektor 16 vorgesehen ist. Beide Detektoren 15, 16 sind vorzugsweise als Drucksensoren 17 ausgebildet. Mit Hilfe der Detektoren 15, 16 wird eine Druckdifferenzmessung zwischen der ersten Leitung 5 und der zweiten Leitung 6 durchgeführt. Im abgeglichenen Zustand der Messbrücke verschwindet die Druckdifferenz.

Mit Hilfe eines variablen Widerstandes 14 wird ein Sollwert für die Kenngröße vorgegeben. Dies kann beispielsweise dadurch erfolgen, dass anstelle des Bauteils 2 ein Master-Objekt (nicht abgebildet) eingesetzt wird und der variierbare Widerstand 14 derart variiert wird, dass die Druckdifferenz, d.h. hier die Kenngröße, verschwindet, wodurch der Abgleichszustand der Messbrücke auf den Durchflusswiderstand des Strömungskanals abgestimmt wird.

Das erfindungsgemäße Verfahren sowie die zur Durchführung des erfindungsgemäßen Verfahrens geeignete Vorrichtung zeichnen sich insbesondere dadurch aus, dass ein bestimmter Durchflusswiderstand eines Strömungskanals in Bauteilen wie Vergaserdüsen oder Gasturbinenschaufeln mit hoher Präzision erzielt werden kann, ohne dass weder besonders bauliche Anforderungen an die Beschaffenheit der verwendeten Einrichtung zur Erzeugung eines Fluidstroms noch dass Druck oder Durchflussraten stabilisierende Mittel erforderlich sind, wie dies bislang im Stand der Technik vorgeschlagen ist.

### Bezugszeichenliste

- 1: Strömungskanal
- 2: Bauteil
- 3: Fluid
- 4: Messbrücke
- 5: erste Leitung
- 6: zweite Leitung
- 7: dritte Leitung
- 8: erster Strömungswiderstand
- 9: zweite Strömungswiderstand
- 10: dritter Strömungswiderstand
- 11: erste Reihenschaltung
- 12: zweite Reihenschaltung
- 13: Parallelschaltung
- 14: variierbarer Widerstand
- 15: Detektor
- 16: Detektor
- 17: Drucksensor
- 18: Durchflussratensensor
- 19: Abfluss
- 20: Einrichtung zur Erzeugung eines Fluidstroms
- 21: Fluidreservoir
- 22: Zuleitung

## Patentansprüche

1. Verfahren zum Bearbeiten eines Bauteils (2) mit einem Strömungskanal (1) und Erzielen eines bestimmten Durchflusswiderstandes des Strömungskanals (1), insbesondere einer Öffnung in einem Bauteil (2), umfassend folgende Schritte:
- ein Fluid (3) strömt durch den Strömungskanal (1), wobei der Strömungskanal (1) bearbeitet wird;
- es wird eine Kenngröße bestimmt, die vom Durchflusswiderstand des Strömungskanals (1) in dem Bauteil (2) abhängt;
- der Strömungskanal (1) wird mit einem Arbeitsverfahren solange bearbeitet, bis die Kenngröße einen vorgegebenen Sollwert erreicht;
**dadurch gekennzeichnet,**
**dass** die Kenngröße mit Hilfe einer auf den Sollwert einer abgeglichenen Messbrücke (4) bestimmt wird.

2. Verfahren nach Anspruch 1, **dadurch gekennzeichnet, dass** das Arbeitsverfahren ausgewählt ist aus der Gruppe chemische Bearbeitung, hydroabrasive Bearbeitung, mechanische Bearbeitung, elektrochemische Bearbeitung, Elektroerosions-Bearbeitung, Elektroplattieren, stromloses Plattieren, Beschichten, und Aufdampfen.

3. Verfahren nach Anspruch 1 oder 2, **dadurch gekennzeichnet, dass** die Messbrücke (4) nach dem Prinzip einer Wheatstone-Brücke aufgebaut ist,
bei welcher der Strömungskanal (1) mittels einer ersten Leitung (5) mit einem ersten Strömungswiderstand (8) zu einer ersten Reihenschaltung (11) und ein zweiter Strömungswiderstand (9) mittels einer zweiten Leitung (6) mit einem dritten Strömungswiderstand (10) zu einer zweiten Reihenschaltung (12) verbunden werden; und
bei welcher die erste (11) und die zweite (12) Reihenschaltung zu einer Parallelschaltung (13) verschaltet werden; und
wobei ein Fluid (3) durch die Parallelschaltung (13) strömt und als Kenngröße die Druckdifferenz des Fluids (3) zwischen der ersten Leitung (5) und der zweiten Leitung (6) und/oder eine Flussrate in einer dritten Leitung (7), welche die erste Leitung (5) mit der zweiten Leitung (6) verbindet, und/oder die Kombination aus beiden bestimmt wird.

4. Verfahren nach einem der vorherigen Ansprüche, **dadurch gekennzeichnet, dass** der Sollwert für eine vorgebbare mittlere Durchflussrate bzw. für einen vorgebbaren mittleren Druck bestimmt wird.

5. Verfahren nach einem der vorherigen Ansprüche, **dadurch gekennzeichnet, dass** der mittlere Bearbeitungsdruck zwischen 3 bis 8 bar, vorzugsweise zwischen 4 bis 6 bar, insbesondere 5 bar beträgt.

6. Verfahren nach einem der vorherigen Ansprüche, **dadurch gekennzeichnet, dass** während einer Bearbeitungspause gemessen wird, in welcher der Strömungskanal (1) frei von einer eingebrachten Kathode ist, zumindest aber frei von einer anliegenden elektrischen Spannung.

7. Verfahren nach einem der vorherigen Ansprüche, **dadurch gekennzeichnet, dass** der Sollwert mit Hilfe eines Master-Objekts bestimmt wird.

8. Verfahren nach einem der vorherigen Ansprüche, **dadurch gekennzeichnet, dass** mindestens ein Widerstand aus der Gruppe erster Strömungswiderstand (8), zweiter Strömungswiderstand (9) und dritter Strömungswiderstand (10) variierbar ist.

9. Verfahren nach Anspruch 7, **dadurch gekennzeichnet, dass** der variierbare Widerstand (14) so vorgebbar ist, dass die Messbrücke (4) abgeglichen ist, sobald der gewünschte Sollwert des Strömungskanals (1) erreicht ist.

10. Verfahren nach Anspruch 7 oder 8, **dadurch gekennzeichnet, dass** der variable Widerstand (14) mit Hilfe eines Master-Objekts vorgegeben wird, indem das Master-Objekt an die Stelle des Strömungskanals (1) gesetzt wird und durch Einstellen des variablen Widerstandes (14) die Messbrücke (4) abgeglichen wird.

11. Verfahren nach einem der vorherigen Ansprüche, **dadurch gekennzeichnet, dass** das Fluid (3) elektrolytische Lösungen, korrosive Fluide, dielektrische Fluide und/oder Träger-Gase umfasst.

12. Verfahren nach einem der vorherigen Ansprüche, **dadurch gekennzeichnet, dass** die Kenngröße mit Hilfe eines Lockin-Verfahrens bestimmt wird.

13. Vorrichtung zum Bearbeiten eines Bauteils (2) mit einem Strömungskanal (1) und Erzielen eines bestimmten Durchflusswiderstandes des Strömungskanals (1), insbesondere einer Öffnung in einem Bauteil (2), vorzugsweise zur Durchführung eines Verfahrens mit den Merkmalen gemäß einem der Ansprüche 1 bis 9, umfassend eine Einrichtung (20) zur Erzeugung eines Fluidstroms, ein Fluidreservoir (21), Mittel zur Bearbeitung des Strömungskanals bis eine Kenngröße einen vorgegebenen Sollwert erreicht und eine abgeglichene Messbrücke (4) zur Bestimmung der Kenngröße, die vom Durchflusswiderstand des Strömungskanals (1) in dem Bauteil (2) abhängt.

14. Vorrichtung nach Anspruch 13, **dadurch gekennzeichnet, dass** das die Messbrücke (4) nach dem Prinzip einer Wheatstone-Brücke aufgebaut ist,
wobei der Strömungskanal (1) mittels einer ersten Leitung (5) mit einem ersten Strömungswiderstand (8) zu einer ersten Reihenschaltung (11) und ein zweiter Strömungswiderstand (9) mittels einer zweiten Leitung (6) mit einem dritten Strömungswiderstand (10) zu einer zweiten Reihenschaltung (12) verbunden ist; und
wobei die erste (11) und die zweite (12) Reihenschaltung zu einer Parallelschaltung (13) verschaltet sind; und
wobei an der ersten Leitung (5) und an der zweiten Leitung (6) ein Drucksensor (17) und/oder zwischen der ersten Leitung (5) und der zweiten Leitung (6) eine dritte Leitung (7) mit einem Durchflussratensensor (18) vorgesehen ist.

15. Vorrichtung nach Anspruch 14, **dadurch gekennzeichnet, dass** der Strömungskanal (1) in der Messbrücke (4) in Strömungsrichtung des Fluids hinter dem ersten Strömungswiderstand (8) angeordnet ist.

16. Vorrichtung nach Anspruch 13, 14 oder 15, **dadurch gekennzeichnet, dass** zumindest die Leitungen (5; 6; 7) aus einem Kunststoff gefertigt sind.

17. Vorrichtung nach einem Ansprüche 13 bis 16, **gekennzeichnet durch** einen Lockin-Verstärker zur Verbesserung des Signal-Rauschverhältnisses der Kenngröße.

## Claims

1. Method for machining of a work piece (2) having a flow channel (1) and attaining a determined flow resistance of the flow channel (1), in particular of an orifice in a work piece (2), comprising the following steps:
- a fluid (3) flows through the flow channel (1), whereby the flow channel (1) is machined;
- a parameter is determined, which is dependent on the flow resistance of the flow channel (1) in the work piece (2);
- the flow channel (1) is machined by a working method until the parameter reaches a pre-determined set point,
**characterized in that** the parameter is determined by means of a measuring bridge (4) aligned to the set point.

2. Method according to claim 1, **characterized in that** the working method is selected from the group of chemical machining, hydro-abrasive machining, mechanical machining, electrochemical machining, electro-discharge machining, electroplating, electroless plating, coating and vaporisation.

3. Method according to claim 1 or 2, **characterized in that** the measuring bridge (4) is built according to the principle of a Wheatstone-bridge, in which the flow channel (1) is connected as a first serial connection (11) by means of a first conduct (5) having a first flow resistance (8) and a second flow resistance (9) is connected to as a second serial connection (12) by means of a second conduct (6) having a third flow resistance (10); and wherein the first (11) and the second (12) serial connection are connected as a parallel circuit; and where a fluid (3) flows through the parallel circuit (13) and as parameter the pressure difference of the fluid (3) between the first conduct (5) and the second conduct (6) and/or a flow rate in a third conduct (7), connecting the first conduct (5) with the second conduct (6), and/or the combination of both is determined.

4. Method according to one of the preceding claims, **characterized in that** the set point is determined for a pre-determinable mean flow rate and/or for a pre-determinable mean pressure.

5. Method according to one of the preceding claims, **characterized in that** the mean machining pressure is between 3 to 8 bar, preferably between 4 to 6 bar, in particular 5 bar.

6. Method according to one of the preceding claims, **characterized in that** the measurement is carried out during a machining pause, during which the flow channel (1) is clear of an introduced cathode, but at free of an applied electric voltage.

7. Method according to one of the preceding claims, **characterized in that** the set point is determined by means of a master object.

8. Method according to one of the preceding claims, **characterized in that** at least one resistance of the group first flow resistance (8), second flow resistance (9) and third flow resistance (10) is variable.

9. Method according to claim 7, **characterized in that** the variable resistance (14) can be pre-determined in such manner that the measuring bridge (4) is aligned, once the desired set point of the flow channel (1) is obtained.

10. Method according to claim 7 or 8, **characterized in that** the variable resistance (14) is a pre-set by means of a master object, whereby the master object is placed in the position of the flow channel (1) and the measuring bridge (4) is aligned by adjusting the variable resistance (14).

11. Method according to one of the preceding claims, **characterized in that** the fluid (3) comprises electrolytic solutions, corrosive fluids, di-electrical fluids and/or carrier gases.

12. Method according to one of the preceding claims, **characterized in that** the parameter is determined by means of a Lock-in-method.

13. Apparatus for machining a work piece (2) having a flow channel (1) and attaining a determined flow resistance of the flow channel (1), in particular of an orifice in a work piece (2), preferably for executing a method having the features according to one of the claims 1 to 9, comprising a device (20) for creating a fluid flow, a fluid reservoir (21), means for machining the fluid channel until a parameter reaches a pre-determined set point and an aligned measuring bridge (4) for determining the parameter, which is dependent on the flow resistance of the flow channel (1) in the work piece (2).

14. Apparatus according to claim 13, **characterized in that** the measuring bridge (4) is built according to the principle of a Wheatstone-bridge, where the flow channel (1) is connected by means of a first conduct (5) having a first flow resistance (8) as a first serial connection (11) and a second flow resistance (9) is connected by means of a second conduct (6) having a third flow resistance (10) as a second serial connection; and wherein the first (11) and the second (12) serial connection are connected as a parallel circuit (13); and wherein at the first conduct (5) and at the second conduct (6) a pressure sensor (17) and/or between the first conduct (5) and the second conduct (6) a third conduct (7) having a flow rate sensor (18) is provided.

15. Apparatus according to claim 14, **characterized in that** the flow channel (1) is arranged in the measuring bridge (4) in direction of the flow of the fluid behind the first flow resistance (8).

16. Apparatus according to claim 13, 14 or 15 **characterized in that** at least the conducts (5; 6; 7) are made of plastic material.

17. Apparatus according to one of the claims 13 to 16, **characterized by** a Lock-in-amplifier for improving the Signal-Noise-ratio of the parameter.

## Revendications

1. Procédé pour traiter un élément de construction (2) avec un canal d'écoulement (1) et pour obtenir une résistance à la circulation donnée du canal d'écoulement (1), notamment pour traiter un orifice dans un élément de construction (2), comportant les étapes suivantes :
- un fluide (3) s'écoule à travers le canal d'écoulement (1), le canal d'écoulement (1) étant traité ;
- un paramètre est déterminé, qui dépend de la résistance à la circulation du canal d'écoulement (1) dans l'élément de construction (2) ;
- le canal d'écoulement (1) est traité aussi longtemps avec un procédé de travail jusqu'à ce que le paramètre atteigne une valeur de consigne prédéterminée ;
**caractérisé en ce que**
le paramètre est déterminé à l'aide d'un pont de mesure (4) égalisé sur la valeur désirée.

2. Procédé selon la revendication 1, **caractérisé en ce que** le procédé de travail est choisi parmi le groupe de traitement chimique, traitement hydroabrasif, traitement mécanique, traitement électrochimique, traitement d'électroérosion, électro-plaquer, plaquer en absence de courant, revêtir et évaporer.

3. Procédé selon la revendication 1 ou 2, **caractérisé en ce que** le pont de mesure (4) est construit selon le principe du pont de Wheatstone, dans le cas duquel le canal d'écoulement (1) est relié en un premier montage en série (11) au moyen d'une première conduite (5) avec une première résistance à l'écoulement (8) et une deuxième résistance à l'écoulement (9) est reliée avec une troisième résistance à l'écoulement (10) au moyen d'une deuxième conduite (6) en un deuxième montage en série (12) ; et dans le cas duquel le premier (11) et le deuxième (12) montage en série sont reliés en un montage parallèle (13); et
dans quel cas un fluide (3) s'écoule à travers le montage parallèle (13) et en tant que paramètre on détermine la différence de pression du fluide (3) entre la première conduite (5) et la deuxième conduite (6) et/ou un débit dans une troisième conduite (7), qui relie la première conduite (5) avec la deuxième conduite (6) et/ou la combinaison de ces deux étant déterminée.

4. Procédé selon l'une quelconque des revendications précédentes, **caractérisé en ce que** la valeur de consigne est déterminée pour un débit moyen pouvant être prédéterminé, respectivement pour une pression moyenne pouvant être prédéterminée.

5. Procédé selon l'une quelconque des revendications précédentes, **caractérisé en ce que** la pression de traitement moyenne comporte entre 3 à 8 bar, de préférence entre 4 à 6 bar, notamment 5 bar.

6. Procédé selon l'une quelconque des revendications précédentes, **caractérisé en ce qu'**on mesure durant une pause de traitement, dans laquelle le canal d'écoulement (1) est exempt d'une cathode introduite, mais du moins exempt d'une tension électrique appliquée.

7. Procédé selon l'une quelconque des revendications précédentes, **caractérisé en ce que** la valeur de consigne désirée est déterminée à l'aide d'un reproducteur (" Master-Objekt" ).

8. Procédé selon l'une quelconque de revendications précédentes, **caractérisé en ce qu'**au moins une résistance parmi le groupe contenant la première résistance à la circulation (8), la deuxième résistance à la circulation (9) et la troisième résistance à la circulation (10) peut être variée.

9. Procédé selon la revendication 7, **caractérisé en ce que** la résistance pouvant être variée (14) peut être prédéterminée de telle manière que le pont de mesure (4) est égalisé dès que la valeur de consigne désirée du canal d'écoulement (1) est obtenue.

10. Procédé selon la revendication 7 ou 8, **caractérisé en ce que** la résistance variable (14) est prédéterminée à l'aide d'un reproducteur ("Master-Objekt"), en agençant le reproducteur à l'endroit du canal d'écoulement (1) et en égalisant le pont de mesure (4) par l'ajustement de la résistance variable (14).

11. Procédé selon l'une quelconque des revendications précédentes, **caractérisé en ce que** le fluide (3) comprend des solutions électrolytiques, des fluides corrosifs, des fluides diélectriques et/ou des gaz porteurs.

12. Procédé selon l'une quelconque des revendications précédentes, **caractérisé en ce que** la valeur de consigne est déterminée à l'aide d'un procédé de blocage.

13. Procédé pour traiter un élément de construction (2) avec un canal d'écoulement (1) et obtenir une résistance à la circulation donnée du canal d'écoulement (1), notamment un orifice dans un élément de construction (2), notamment pour la mise en oeuvre d'un procédé ayant les caractéristiques selon l'une quelconque des revendications 1 à 9, comprenant un dispositif (20) pour générer un flux de fluide, un réservoir de fluide (21), des moyens pour traiter le canal d'écoulement, jusqu'à ce qu'un paramètre atteigne une valeur de consigne prédéterminée et un pont de mesure (4) égalisé pour déterminer le paramètre qui dépend de la résistance à la circulation du canal d'écoulement (1) dans l'élément de construction (2).

14. Dispositif selon la revendication 13, **caractérisé en ce que** le pont de mesure (4) est construit selon le principe d'un pont de Wheatstone, le canal d'écoulement (1) étant relié en un premier montage en série (11) au moyen d'une première conduite (5) avec une première résistance à l'écoulement (8) et une deuxième résistance à l'écoulement (9) qui est reliée avec une troisième résistance à l'écoulement (10) au moyen d'une deuxième conduite (6) en un deuxième montage en série (12) ; et le premier (11) et le deuxième (12) montage en série étant reliés en un montage parallèle (13); et sur la première conduite (5) et la deuxième conduite (6) un capteur de pression (17) et/ou entre la première conduite (5) et la deuxième conduite (6) une troisième conduite (7) avec un capteur de débit (18) étant prévu.

15. Dispositif selon la revendication 14, **caractérisé en ce que** le canal d'écoulement (1) est agencé dans le pont de mesure (4) en direction d'écoulement du fluide derrière la première résistance à l'écoulement (8).

16. Dispositif selon la revendication 13, 14 ou 15, **caractérisé en ce qu'**au moins les conduites (5 ; 6 ; 7) sont fabriquées à partir d'une matière plastique.

17. Dispositif selon l'une quelconque des revendications 13 à 16, **caractérisé par** un amplificateur de blocage pour améliorer le rapport signal/bruit du paramètre.
